(19) Europäisches Patentamt / European Patent Office / Office européen des brevets

(11) **EP 1 902 769 A1**

(12) **EUROPEAN PATENT APPLICATION**

(43) Date of publication:
**26.03.2008 Bulletin 2008/13**

(51) Int Cl.:
***B01D 53/86*** *(2006.01)*     ***C01B 17/04*** *(2006.01)*

(21) Application number: **06076765.4**

(22) Date of filing: **22.09.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **Jacobs Nederland B.V.**
**2332 CB Leiden (NL)**

(72) Inventor: **Borsboom Johannes**
**2282 VC Rijswijk (NL)**

(74) Representative: **van Loon, C.J.J. et al**
**VEREENIGDE**
**Johan de Wittlaan 7**
**2517 JR Den Haag (NL)**

(54) **Process for the recovery of sulfur from sulfur containing gases**

(57)     The invention is directed to a process for the recovery of sulfur from sulfur containing gases with a high sulfur recovery efficiency of at least 99.8 %.

According to the process of the invention a tail gas of a Claus-type installation with a sulfur recovery efficiency of at least 97 % is hydrogenated, selectively oxidized at a temperature between the water dewpoint temperature and 280 °C, and cooled to a temperature of 80-115 °C.

The process of the invention enables total sulfur recovery efficiencies of at least 99.8 %.

EP 1 902 769 A1

**Description**

The invention is directed to a process for the recovery of sulfur from sulfur containing gases with a high sulfur recovery efficiency of at least 99.8 %.

A well-know process for the recovery of sulfur from sulfur containing gases is the so-called Claus process or SRU (Sulfur Recovery Unit).

In this process, the acid gas feed containing hydrogen sulfide ($H_2S$) is burned with combustion air. Approximately one-third (mol/mol) of the $H_2S$ is oxidized to sulfur dioxide ($SO_2$) in the so-called thermal stage, according to:

$$2 H_2S + 3 O_2 \rightarrow 2 SO_2 + 2 H_2O \qquad (1)$$

The remaining $H_2S$ reacts further with the formed $SO_2$ to sulfur vapor, according to the Claus reaction:

$$4 H_2S + 2 SO_2 \leftrightarrows 3 S_2 + 4 H_2O \qquad (2)$$

The formed sulfur vapor $S_2$ is condensed as liquid sulfur, and separated from the process gas, in a sulfur condenser.

In the thermal stage, approximately 50-75 % of the $H_2S$ in the acid gas feed is recovered as elemental sulfur and 50-25 % is charged to the catalytic Claus stages. The thermal stage is typically followed by two or three catalytic Claus stages, in order to increase the Sulfur Recovery Efficiency (SRE).

Each catalytic stage typically comprises a process gas reheater, a catalytic Claus converter and a sulfur condenser. $H_2S$ and $SO_2$ react in the Claus converter to sulfur vapor, according to the reaction:

$$2H_2S + SO_2 \leftrightarrows \tfrac{3}{n} S_n + 2H_2O \qquad (3)$$

wherein $n$ = 2-8. The formed elemental sulfur is separated from the product gas in the sulfur condenser.

Typically, the SRE is 90-96 % for a so-called two-stage Claus plant, i.e. a plant with two catalytic stages, and typically 95-98 % for a three-stage Claus plant. A SRE close to 100 % cannot be reached due to thermodynamic limitations of the Claus reaction.

Nowadays, for most countries a SRE of 98 % is insufficient. For plant capacities of more than 50 tons per day of sulfur production, the German TA-Luft requires a SRE of at least 99.8 %. Other regions in the world, such as Japan, Taiwan and the USA, require SREs close to 100 %, *i.e.* $\geq$ 99.95 %.

Present technologies for SRE enhancement rely almost exclusively on either of three basic principles: Claus operation under thermodynamically more favorable conditions, selective oxidation of $H_2S$ in a downstream catalytic converter and Claus tail gas clean up.

SREs up to 99.5 % can be reached by lowering the operating temperature of one or more catalytic Claus stages. Bringing the temperature down shifts the thermodynamic equilibrium of Claus reaction (3) to the sulfur side of the equation and increases the SRE. The so-called sub-dewpoint processes are based on this principle. Sub-dewpoint processes, such as MCRC, CBA and Sulfreen, are known to those skilled in the art.

A disadvantage of the sub-dewpoint processes is that they are discontinuous, because the formed liquid sulfur is retained in the catalyst. The sub-dewpoint converter has to be regenerated with hot gas in order to remove the collected sulfur from the catalyst. This requires expensive multiple converter systems and switching valves. The sub-dewpoint processes are also prone to corrosion problems because of the frequent high-low temperature cycles.

The SUPERCLAUS® and EUROCLAUS® processes are based on SRE enhancement by selectively oxidizing the $H_2S$ coming from the last catalytic Claus stage to sulfur.

The SUPERCLAUS® and EUROCLAUS® processes cover a SRE range of typically 98.8-99.6 %. The present technology cannot exceed this range, for a number of reasons. Four to twelve percent of the $H_2S$ going to the selective oxidation stage is converted to $SO_2$ instead of elemental sulfur. This $SO_2$ formation represents a loss of SRE. Another aspect is that the tail gas from the sulfur condenser downstream from the selective oxidation converter is kept at a temperature of 125 °C. Such a temperature guarantees a removal of the considerable quantities of sulfur that come from the oxidation stage without sulfur plugging problems, but the sulfur vapor pressure in the off gas is still relatively high, resulting in a SRE loss of 0.13-0.25 %. Finally, there is some SRE loss due to COS and $CS_2$ coming from the Claus unit.

Commercial Tail Gas Clean-Up (TGCU) processes can meet the stringent recovery efficiencies mentioned above. An overview of the commercial TGCU processes can be found in Gas Purification, Kohl and Nielsen, 5th Edition, Chapter 8, pages 698-724, and also in Sulphur No. 227, July-August 1993, pages 39-44.

Claus type tail gases, *e.g.* Claus, SUPERCLAUS® and EUROCLAUS® tail gas, or tail gas from sub-dewpoint processes, contain $H_2S$, $SO_2$, COS, $CS_2$, sulfur vapor and sulfur mist. There is presently no technology that allows for direct and simultaneous conversion of each of these components into, for instance, elemental sulfur with a high SRE. A feasible approach is therefore to convert the sulfur compounds first to $H_2S$, by hydrogenation and hydrolysis, and then to process the $H_2S$.

In US-A-3 752 877 of D.K. Beavon, assigned to Parsons, filed in 1969, a process is described for the treatment of Claus tail gas. In a hydrogenation/hydrolysis converter, all sulfur components are converted to $H_2S$. After this step, the majority of the water is removed by condensation. The water removal step is followed by any $H_2S$ removal process, such as the BSR-Stretford process.

In NL-A-0 171 144 (corresponding to GB-A-1 356 289), filed in 1970 and assigned to Shell, a process is described for the treatment of Claus tail gas. In a hydrogenation/hydrolysis converter, all sulfur components are converted to $H_2S$. In a next step, the majority of the water is removed by condensation. The process gas is then treated in an amine absorber where the $H_2S$ is absorbed in the amine solvent. The amine solvent is regenerated in an amine regenerator, and the stripped $H_2S$ is recycled back to the Claus plant.

The above patent is the basis for the Shell Claus Off-gas Treating (SCOT) process, with a SRE of typically 99.8-99.95 %, and later developments, the Low Sulfur SCOT (LS-SCOT, GB-A-1 547 590) and the Super SCOT (CA-A-1 339 974) with a SRE of typically 99.5-99.98 %.

In the SCOT process, the sulfur components in the Claus tail gas other than $H_2S$, are hydrogenated or hydrolyzed to $H_2S$, according to:

$$SO_2 + 3\,H_2 \rightarrow H_2S + 2\,H_2O \qquad (4)$$

$$S_{8(vapor)} + 8\,H_2 \rightarrow 8\,H_2S \qquad (5)$$

$$COS + H_2O \rightarrow CO_2 + 2\,H_2S \qquad (6)$$

$$CS_2 + 2\,H_2I \rightarrow CO_2 + 2\,H_2S \qquad (7)$$

Typical catalysts for the hydrogenation and hydrolysis comprise sulfided CoMo ($CoSMoS_2$) on an alumina support.

The next step in the SCOT process is to cool the process gas in a heat exchanger and a quench column, where the majority of the water vapor is condensed and removed. The water vapor content of the Claus tail gas is typically 30-35 vol.%, the water vapor content of the quench column product gas is typically around 5 vol.%. This cooling step requires not only equipment, but also energy to remove the large heat of condensation of the water vapor by means of power for the air fan motors of the air coolers. Another disadvantage is that sour water is produced, i.e. condensate containing dissolved $H_2S$, which has to be treated in an additional Sour Water Stripper.

The next step in the SCOT process is to separate the $H_2S$ from the other components, which are mainly nitrogen ($N_2$), water vapor ($H_2O$) and carbon dioxide ($CO_2$) This $H_2S$ removal step is performed in an amine treating unit, applying a selective amine such as DIPA (diisopropanolamine) or MDEA (methyl-diethanolamine). Usually, a complete amine unit, consisting of an amine absorber, amine regenerator and the required solvent pumps, vessels, filters, and heat exchangers, is installed. This makes, together with the quench step, the SCOT process expensive.

The next step in the SCOT process is to recycle the amine regenerator off-gas, containing the concentrated $H_2S$ and also the co-absorbed $CO_2$, back to the Claus unit, where the $H_2S$ is converted into elemental sulfur. This recycle stream will increase the size of the Claus unit with some 5-10 %.

The SCOT process and its look-alikes are reliable processes, but are expensive. The additional investment costs amount to 60-120 % of the investment costs of a two-stage Claus plant, and also the utility (energy) costs are quite high.

In the SCOT process, the $H_2S$ is separated from the other components by means of absorption in a selective amine solvent. An alternative is the BSR-Stretford process, according to which the $H_2S$ is separated from the other components by means of a liquid oxidation step of the $H_2S$ into solid sulfur, at ambient temperatures. Such a liquid oxidation step brings additional problems, such as the contamination of the product (solid sulfur) with oxidation chemicals (for the Stretford process, this is the heavy metal vanadium), a high chemical consumption, batch-wise operation, in particular separation of the solid sulfur from the process liquid by filtration, foaming of the applied solvent, bacterial growth, plugging problems with solid sulfur, difficult separation of the solid sulfur, etc. For these reasons, this type of process is not the preferred technical solution for a high SRE process.

In the SUPERCLAUS® process, according to US-A-4 988 494, $H_2S$ is separated from Claus process gas over a solid catalyst by oxidation to sulfur vapor, with an iron oxide containing catalyst, which is selective for $H_2S$ oxidation to sulfur. The SUPERCLAUS® process and also the improved SUPERCLAUS® process known as EUROCLAUS® are described in Sulphur no. 287, July-August 2003, pages 31-36. Suitable catalysts for selective oxidation of $H_2S$ with air-oxygen to elemental sulfur are described in US-A-4 818 740, US-A-5 286 697, US-A-5 814 293 and US-A-6 919 296.

In general, the process configuration for the SCOT and BSR-Stretford units comprise a Claus SRU with two catalytic Claus stages and a SRE of around 96 % upstream from the tail gas unit. Therefore, a common SCOT or BSR-Stretford unit must handle almost 4 % of the $H_2S$ in the acid gas feed to reach 99.9 % SRE. Such quantities add considerably to, in particular the operational costs of the tail gas processes.

A SUPERCLAUS® unit, instead of a Claus unit, with a SRE of, for instance, 99.2 %, comprising a selective oxidation step and two catalytic Claus stages upfront, would considerably reduce the load of a SCOT or BSR-Stretford unit from 4 % to 0.7-0.8 % of the $H_2S$ in the Claus feed gas. This would bring a significant relief to the operational costs, but hardly to the investment costs and the reliability problems of processes like Stretford.

The above problems with SCOT and Stretford are avoided with the process according to Example VI in US-A-4 988 494. In this Example a process configuration of a Claus unit with two catalytic stages, a selective oxidation stage, a hydrogenation stage such as in SCOT and a second selective oxidation stage is described. An overall SRE of 99.8 % is obtained. A potential problem arises from the fact that the gas leaving the selective oxidation converter for hydrogenation and hydrolysis is significantly different from a gas from a Claus converter. Firstly, the gas is expected to contain free oxygen that has not reacted in the oxidation stage. This is due to the fact that excess free oxygen is required in the oxidation stage of a SUPERCLAUS® or EUROCLAUS® unit for stable operation and compensation of feed gas fluctuations. Usually the oxygen control set point is such that 0.2-0.5 % oxygen is coming out of the selective oxidation converter. Secondly, the $H_2S/SO_2$ ratio in the gas to be hydrogenated is much lower than 1, while in a common SCOT process the ratio is $\geq 2$. $H_2S$ is in the order of 100 ppmv, while $SO_2$ is as high as 800-1600 ppmv. As a result, the gas going to the hydrogenation and hydrolysis catalyst is much more oxidative than the usual SCOT or BSR-Stretford feed gas.

As the hydrogenation and hydrolysis catalyst is a sulfide of, for instance, cobalt-molybdenum, the increased oxidative properties may destroy the sulfide structure and the catalytic activity. US-A-4 243 647, for example describes that oxygen quantities in the Claus tail gases of greater than about 1000 ppmv cause a permanent poisoning of the hydrogenation catalyst. It is therefore not a logical step to put a selective oxidation stage upstream from a SCOT type of hydrogenation.

The potential danger of the catalyst deactivation by oxygen is apparently recognized by Example VI in US-A-4 988 494. The gas which is supplied to the first selective oxidation stage in this Example contains 3.29 kmol/h of $H_2S$ and 1.97 kmol/h of $O_2$. In the first selective oxidation stage, 90 % of the $H_2S$ is converted into elemental sulfur according to

$$H_2S + \tfrac{1}{2} O_2 \rightarrow S + H_2O \qquad\qquad (8)$$

whereby ( $\tfrac{1}{2} \cdot 3.29 \cdot 0.9$) = 1.48 kmol/h $O_2$ is consumed and 10 % of the $H_2S$ is converted into $SO_2$ according to:

$$H_2S + \tfrac{3}{2} O_2 \rightarrow SO_2 + H_2O \qquad\qquad (9)$$

whereby ( $\tfrac{3}{2} \cdot 3.29 \cdot 0.1$) = 0.49 kmol/h $O_2$ is consumed. The total amount of oxygen consumed in the first selective oxidation step is thus 1.48 + 0.49 = 1.97. This equals the amount of oxygen in the gas that is supplied to the first selective oxidation stage. Thus, the concentration of free oxygen in the feed gas of the subsequent hydrogenation step is zero. Absence of free oxygen in the hydrogenation step reduces the risk of catalyst deactivation.

The practical application of this Example becomes very difficult. An imperfect control of the oxygen supply to the first selective oxidation stage with periods of $O_2$ shortage will cause slip of $H_2S$ leading to performance below the goal of a very high SRE. Also, a shortage of free oxygen will cause the iron on the catalyst for selective oxidation to react with $H_2S$ to iron sulfide, which catalyst is not selective for sulfur production.

Compared to the other Examples in US-A-4 988 494 with more $O_2$ excess, Example VI teaches that oxygen to the hydrogenation step must be avoided at the risk of $H_2S$ slip through the first stage selective oxidation catalyst bed, which makes the process of Example VI unsuitable for a very high continuous sulfur recovery efficiency. Further, this process still suffers from sulfur vapor losses amounting up to 0.13 % or more.

Objectives of the present invention are to provide a process for conversion of $H_2S$, as in typical Claus feed gases, to elemental sulfur, capable of 99.8+ % SRE.which process can be operated preferably on a continuous basis, with low investment and operational costs. By applying the process of the invention expensive features such as a water removal step, a recycle stream to the Claus feed gas which leads to increasing investment costs for the Claus unit and an expensive $H_2S$ removal step become redundant.

The invention relates to a process for the recovery of sulfur from sulfur containing gases with a high sulfur recovery efficiency of at least 99.8 %, comprising:

- treating of acid gas feed in a Claus-type installation, to produce a tail gas in which the total concentration of sulfur compounds is less than 0.8 vol.%, expressed as $S_1$;
- subjecting the sulfur compounds in the tail gas from said Claus-type installation to a hydrogenation/hydrolysis step to produce a product gas comprising $H_2S$;
- selectively oxidizing $H_2S$ in said product gas with an appropriate catalyst to elemental sulfur in a selective oxidation converter at a temperature between the water dewpoint temperature and 280 °C; and
- cooling the gas leaving the selective oxidation step to a temperature of 80-115 °C.

In the process according to the invention $H_2S$ in an acid gas feed is converted to elemental sulfur in a Claus type process to produce a gas containing sulfur compounds with a concentration of less than 0.8 vol.% total sulfur, expressed as $S_1$. The gas may contain free oxygen in a concentration of 0-0.8 vol.%, preferably 0.1-0.7 vol.%, more preferably 0.2-0.5 vol.%. Subsequently, the sulfur compounds are completely hydrogenated or hydrolyzed to $H_2S$. Thereafter, the $H_2S$ is selectively oxidized to elemental sulfur, after which the elemental sulfur is separated from the process gas in a sulfur condenser, at a temperature below the sulfur solidification temperature.

Claus type processes are, for instance, a conventional Claus process, a SUPERCLAUS® or EUROCLAUS® process, or a sub-dewpoint process. For a typical Claus acid gas feed with 90 vol.% $H_2S$, the requirement of less than 0.8 vol.% in the Claus tail gas corresponds to a SRE requirement of at least 97 %. Technically, all types of Claus related technologies are suitable. For reasons mentioned earlier, a conventional Claus process, a SUPERCLAUS® or EUROCLAUS® process are preferred over a sub-dewpoint process. The important factor in this first step of the invention is to reduce the total sulfur content of the process gas, after sulfur condensation, in such a way that a value is obtained of less than 0.8 vol.% total sulfur expressed as $S_1$, preferably less than 0.5 vol.%, more preferably less than 0.3 vol.%. In general, a lower total sulfur content reduces the amount of $SO_2$ production in the second selective oxidation stage, resulting in an increased SRE. Therefore, the process gas for the hydrogenation step is preferably produced in a SUPERCLAUS® or EUROCLAUS® unit.

As mentioned above, Claus type tail gases, contain several sulfur components. According to the present invention, substantially all sulfur components are converted into $H_2S$ by hydrogenation or hydrolysis, before handling the process gas further. Conversion of elemental sulfur vapor is not required, but usually deep conversion of $SO_2$ and $COS/CS_2$ is accompanied by conversion of sulfur vapor. In case the last Claus-type converter stage is a selective oxidation stage such as in a SUPERCLAUS® or EUROCLAUS® unit, the process gas leaving this stage typically contains: free oxygen in the range of 0.15-0.5 vol.%, an amount of $H_2S$ in the range of 100-200 ppmv, a larger amount of $SO_2$ in the range of 800-1600 ppmv and sulfur vapor, as well as COS and $CS_2$.

Active catalysts for hydrogenation and hydrolysis of the above sulfur components into $H_2S$ are metal sulfides on a support. The metals can be chosen from e.g. Co, Mo, Ni, W, and Cr. As an example, $CoSMoS_2$ on alumina is a suitable catalyst for this application. As $O_2$ and also $SO_2$ are oxidizing components, they may destroy the sulfide structure and deactivate the catalyst. The hydrogenation/hydrolysis step is typically carried out at a temperature that is somewhere in the range of about 140 °C and 350 °C. The operating temperature depends on the type of catalyst used, and is usually selected above the sulfur dewpoint of the gas.

The catalysts for the hydrogenation and hydrolysis may have a high hydrogenation capacity at low temperatures, such as an inlet temperature of 220 °C, preferably 210 °C. Thus, the hydrogenation/hydrolysis step is preferably carried out in the presence of a low temperature (200-250 °C) hydrogenation catalyst, such as Axens TG-107. If a hydrogenation/hydrolysis catalyst is available that is able to operate at lower temperatures, i.e. down to 140 °C, such catalyst can also be used.

Alternatively, a high temperature (280-330 °C) hydrogenation/hydrolysis catalyst may be used.

If a hydrogenation/hydrolysis catalyst is available that is able to operate at temperatures between 250 °C and 280 °C, such catalyst can also be used.

Surprisingly, it has now been found that complete and stable hydrogenation and hydrolysis to $H_2S$ is possible even with a relatively high content of oxidizing components. Detailed laboratory testing has been performed to find the process conditions and suitable catalyst types for an acceptable hydrogenation performance for a longer period of time.

The hydrogen + CO to oxygen ratio of the inlet gas is preferably between 5 and 10, more preferably between 6 and 8.

The space velocity can be from 500 to 5 000 per hour, preferably from 1000 to 2000 per hour, more preferably from 1200 to 1700 per hour.

After the hydrogenation and hydrolysis step, the product gas, containing $H_2S$ as the single sulfur compound, is mixed with a gas containing free oxygen, for instance air. After mixing, the $H_2S$ is catalytically oxidized to elemental sulfur in a selective oxidation step. The selective oxidation step is preferably carried out in a dry bed.

For the process according to the invention to achieve an overall SRE of at least 99.8 %, preferably more than 99.9 %, selective oxidation of $H_2S$, after hydrogenation and hydrolysis, should take place with a high yield to sulfur, in the order of 91-96 %.

A further object of the invention is to maximize the sulfur yield in the selective oxidation step, while maintaining the advantage of a continuous process, without the necessity of water vapor removal.

Selective oxidation of $H_2S$ at ambient temperatures (30-50 °C) as an option would result in virtually 100 % sulfur yield and an extremely high overall SRE, but such a process requires the removal/condensation of the water vapor in the process gas, which step is expensive and produces a waste stream of sour water. Moreover, solid sulfur would accumulate in the catalyst and would have to be removed by vaporization sooner or later in a high temperature sulfur removal step.

Alternatively, one can use a sub-dewpoint oxidation catalyst in order to oxidize the $H_2S$ after hydrogenation/hydrolysis at temperatures between the water dewpoint temperature and 180 °C. It is known that selective oxidation at such temperatures can lead to a high yield to sulfur. As an example, reference is made to patent applications US-A-6 024 933 and US-A-5 607 657. Patent application US-A-6 024 933 discloses a catalyst and a process for the selective oxidation of $H_2S$ to elemental sulfur with a high yield, applying a catalyst containing CuO.

US-A-5 607 657 describes a process for the selective oxidation of $H_2S$ to sulfur, with a catalyst for selective oxidation of $H_2S$, at a temperature between the water dewpoint and 180 °C. In the patents cited virtually all of the formed sulfur is said to be retained in the catalyst and one has to evaporate the sulfur from the catalyst at elevated temperatures at regular intervals. Such a discontinuous process is not the preferred option.

Furthermore, at converter temperatures up to 180 °C the sulfur recovery losses due to sulfur vapor can amount to more than 2 %. The example in US-A-5 607 657 mentions a converter outlet temperature of 110 °C, which corresponds to approximately 0.04 % sulfur recovery loss, not negligible for a process with a SRE of 99.9 %.

In the process according to the invention, a SRE of 99.8+ % can be achieved by cooling the process gas to 80-115 °C downstream a selective oxidation step which is operated at temperatures between the water dewpoint temperature and 280 °C. To that end above sub-dewpoint selective oxidation catalysts can be applied, although preferably SUPERCLAUS® type selective oxidation catalysts are used. These catalysts, described *inter alia* in US-A-4 818 740, US-A-5 286 697, US-A-5 814 293, US-A-6 919 296, operate at temperatures between 180 and 280 °C and are capable of converting $H_2S$ with a yield of maximum 95 %. The catalysts allow for a stoichiometric excess of free oxygen in the selective oxidation feed, while maintaining a high yield. The amount of added free oxygen is controlled to give 0.15-5 vol.% oxygen in the product gas, preferably 0.15-0.3 vol.%.

In the process according to the invention the amount of $H_2S$ in the feed gas going to the selective oxidation stage is controlled at such a value that, after 100 % conversion to sulfur, the sulfur dewpoint temperature is less than 180 °C. It can be shown that such conditions correspond to a maximum $H_2S$ feed concentration of 0.8 vol.%, at pressures slightly above atmospheric. This means that at 180 °C or more the sulfur remains in the vapor phase, enabling continuous selective oxidation at relatively low temperatures with a very high yield.

For a process according to the invention it is required to remove as much sulfur as possible in the final step of the process by cooling the product gas to a temperature below the sulfur melting point, *i.e.* at 80-115 °C, preferably to 80-90 °C. To that end a sulfur condenser as described in US-A-5 897 850 can be used, without interference with the continuity of the process. Sub melting point removal of sulfur vapor from the process gas is considerably more effective than the conventional sulfur condensation that apply outlet temperatures around 125 °C. The reduction of sulfur vapor losses achieved in this way enhances the overall SRE by 0.13-0.25 %. The formation of solid or liquid sulfur on a catalytic bed, however, has technical disadvantages. The normal procedure to remove this solid or liquid sulfur from the catalyst bed, is a batch-wise vaporization at a temperature level of typically 300-350 °C. This means batch-wise operation, stress corrosion of piping and converter shell, catalyst deterioration and dust formation, expensive switching valves and energy consumption to raise the temperature of converter, piping and catalyst to elevated temperatures.

For these reasons, a strongly preferred embodiment of the invention is directed to a continuous catalytic process, which avoids the formation of solid or liquid sulfur on the catalyst bed.

In order to keep the catalytic part of the sulfur recovery process continuous, the catalytic selective oxidation converter should be operated above its flat sulfur dewpoint to prevent liquid sulfur from accumulating in the catalyst pores. More preferred is a slightly higher operating temperature in the order of a margin of 5-15 °C above the flat sulfur dewpoint. These conditions will prevent that the majority of the catalyst pores will be filled with liquid sulfur as a result of capillary condensation. As a result, only pores with a pore diameter of typically 50-150 Å will contain liquid sulfur. In this way, the catalyst activity is maintained.

As mentioned above, the tail gas of the Claus-type installation, *i.e.* the Claus section upstream of the hydrogenation stage, should have a total concentration of sulfur compounds of less than 0.8 vol.%, expressed as $S_1$. This

implies a high SRE of the Claus-type installation, typically at least 97 %, more preferably at least 98 % and most preferably at least 98.5 %, the latter corresponding to installations with selective oxidation as last catalytic step, in order to reach an overall SRE of at least 99.8 %. As an example, with a Claus section SRE of 98 % and a sulfur yield in the final selective oxidation stage of 95 %, the losses of $H_2S$ and $SO_2$ are 5 % of 2 %, being 0.10 %. With some sulfur vapor losses, the SRE will be well above 99.8 %.

The process conditions for a continuous catalytic process will now be illustrated in the following embodiment with some quantitative data.

Process gas with an $H_2S$ content of 0.30 vol.% and a pressure of 0.1 barg, and assuming that the $H_2S$ will be oxidized completely to elemental sulfur and water vapor, according to equation (8), exhibits a flat sulfur dewpoint of 160 °C.

Consequently, the catalyst bed bottom temperature of the selective oxidation converter should be 165-175 °C, applying a margin of 5-15 °C above the flat sulfur dewpoint. In this way, the produced sulfur vapor is contained within the process gas and accumulation in the catalyst pores is prevented, thereby making a continuous process possible.

As the converter temperature rise is approximately 20 °C as a result of the exothermic oxidation of $H_2S$, the converter inlet temperature of the selective oxidation in this illustrative embodiment should be 145-155 °C. This represents the minimum inlet temperature for a continuous process. A minimum converter temperature level of 145-155 °C inlet and 165-175 °C outlet is advantageous to keep the concentration of sulfur radicals on the catalyst surface as low as possible. Sulfur radicals are easily converted to $SO_2$, and will consequently reduce the yield to sulfur of the selective oxidation.

The produced sulfur vapor in the selective oxidation converter represents some 0.8-3.0 % recovery efficiency and this sulfur loss should be recovered by condensation and/or solidification. Preferably, these losses are first reduced to approximately 0.2 % by a conventional last sulfur condenser operating at 125 °C which is just above the sulfur solidification temperature. A convenient apparatus for subsequent recovery of sulfur below 125 °C is described in US-A-5 897 850. This heat exchanger is cooled with ambient air, allowing an outlet temperature of the process gas of 80-115 °C. The process gas should not be cooled below its water vapor dewpoint, which is normally in the range of 69-77 °C for Claus tail gas, containing 30-35 vol.% water vapor and at a pressure of 0-0.2 barg. Solid sulfur is formed in the upper part of the tubes as solid monoclinic sulfur needles. Periodic regeneration is required to maintain a process gas outlet temperature of 80-115 °C. However, regeneration is simply achieved by raising the temperature, *e.g.* by pressurizing the air side of the exchanger with low pressure steam, to above 115 °C, which is the melting temperature of monoclinic sulfur. The sulfur needles will melt quickly and will flow down along the tube walls. A fully continuous process is obtained by installing a second heat exchanger in parallel.

In a further aspect, the present invention is directed to the processing of minor streams containing $H_2S$, sulfur vapor and free oxygen such as vent air from a sulfur pit, sulfur tank or sulfur degassing vessel. Such a vent air stream usually contains $H_2S$ in the order of 300-800 ppmv, sulfur vapor in the order of 400 ppmv S, and free oxygen in the order of 10-20 vol.%. The sulfur recovery loss contained in this vent air is in the order of 0.03 % for the design capacity of the sulfur plant, but will increase for sulfur plant turndown (0.15 % losses for 20 % plant turndown). This vent air stream is usually directed by means of a steam ejector with a discharge pressure of less than 0.1 barg to an incinerator for oxidation of the sulfur components to $SO_2$. This may give a problem exceeding the $SO_2$ level in the stack gas for sulfur plants with a recovery efficiency requirement close to 100 %.

Alternatively, this stream may be directed to the Claus main burner, but technically this is difficult because of the required much higher pressure - vent air is usually emitted from the vented vessels at atmospheric pressure, and its pressure has to be increased to the burner pressure, typically 0.5-0.7 barg - , the presence of $O_2$ in this stream and the presence of sulfur vapor which may condense or solidify.

Also, the presence of free oxygen prohibits that the vent air stream is directed to a catalytic Claus converter, because free oxygen will deactivate the alumina Claus catalyst by sulfation.

In an embodiment of the present invention the selective oxidation stage is charged with a stream containing $H_2S$, sulfur vapor and free oxygen, such as vent air. The pressure in the selective oxidation stage is low, typically 0.1 barg, the $H_2S$ will be oxidized to sulfur vapor, the free oxygen does not form a problem and is actually required for the oxidation, and the sulfur vapor will be removed in the final cooling step. The vent air can, at least partly, replace the oxidation air that is normally supplied by an air blower to the selective oxidation stage.

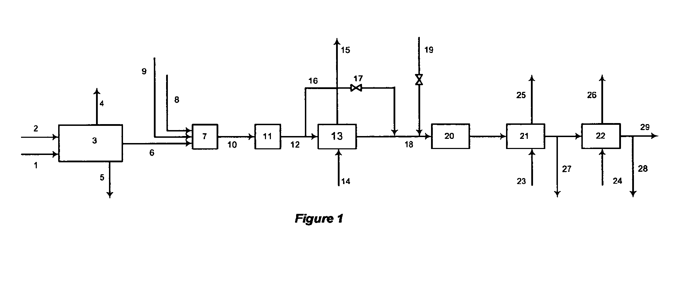

The present invention will now be elucidated by means of Figure 1.

In Figure 1 an acid gas feed, containing $H_2S$, is supplied to sulfur recovery unit 3 through line 1. The corresponding combustion air is supplied through line 2, the generated steam is discharged through line 4 and the produced liquid sulfur is discharged through line 5. The sulfur recovery efficiency of unit 3 is at least 97 %. The tail gas from unit 3 is routed to reheater 7 through line 6, where the tail gas is heated to the required temperature by means of fuel gas (line 8) and combustion air (line 9). The heated tail gas is routed to the hydrogenation converter 11 through line 10. In the hydrogenation converter 11 the sulfur components are hydrogenated and hydrolyzed to HzS with a suitable catalyst, such as a cobalt-molybdenum catalyst. The hot process gas is routed to heat exchanger 13 through line 12.

Boiler feed water is supplied through line 14, the generated steam is discharged through line 15. Bypass 16 is used to charge hot process gas to converter 20, the flow of the hot bypass gas being controlled by temperature control valve 17. In this way the required inlet temperature of converter 20 is maintained.

To the process gas flowing through line 18, selective oxidation air is supplied through line 19. In converter 20 the selective oxidation of $H_2S$ to sulfur takes place.

The hot process gas is cooled in two steps in heat exchangers 21 and 22. The cooling medium is supplied through lines 23 and 24 and discharged through lines 25 and 26. The sulfur condensed in exchanger 21 is discharged through line 27 at some 125 °C.

The process gas is further cooled (90 °C) in exchanger 22 with air. Solid sulfur inside exchanger 22 is periodically removed by increasing the temperature to above the sulfur melting temperature, and discharged through line 28.

## EXAMPLE 1

A sulfur recovery unit is fed with an acid gas feed containing 100 kmol/h of $H_2S$.

In the thermal Claus stage, applying free flame technology, 60 kmol/h (1920 kg/h) of sulfur is recovered from the process gas, resulting in a SRE of 60 %.

After the first catalytic Claus stage, another 30 kmol/h (960 kg/h) of sulfur is recovered, bringing the cumulative SRE to 90 %. After the second catalytic Claus stage, with another 5.0 kmol/h (160 kg/h) of sulfur production, the cumulative SRE is 95 %. Applying SUPERCLAUS® technology, with another 134 kg/h of sulfur production, the cumulative SRE is 99.2 %. The liquid sulfur contains 0.03 wt.% of $H_2S$ and is degassed by blowing air through the sulfur, as in US-A-6 149 887.

The SUPERCLAUS® tail gas is charged to a hydrogenation converter stage. After heating in an indirect reheater to 220 °C, the sulfur components are hydrogenated/hydrolyzed to $H_2S$ applying a CoMo type of catalyst. Also the small amount of excess oxygen of 0.2 vol.%, present in the tail gas of the SUPERCLAUS® converter stage, is hydrogenated to water vapor with the excess of hydrogen, present in the process gas. The process gas leaves the hydrogenation converter at a temperature of 261 °C, the $H_2S$ content in the process gas being 0.3 vol.%.

The product gas from the hydrogenation converter is cooled in a heat exchanger to 220 °C.

To the cooled process gas, with a flow of 300 kmol/h, 6.5 kmol/h of air is added, applying an $O_2:H_2S$ molar ratio of 1.5:1. The air is vent air from the sulfur degassing unit, containing 0.03 kmol/h of $H_2S$ and 0.004 kmol/h of sulfur vapor as $S_1$.

This gas mixture is directed to the selective oxidation converter, containing an appropriate oxidation catalyst, wherein the $H_2S$ is oxidized to elemental sulfur vapor with a yield of 95 % to sulfur. The process gas leaves the selective oxidation converter at 240 °C.

Sulfur vapor is removed from the process gas as liquid sulfur in a sulfur condenser and as solid sulfur in a heat exchanger 1, which is cooled with air. In case the process gas outlet temperature increases to above 90 °C, a parallel heat exchanger 2 is put into operation and heat exchanger 1 is regenerated by increasing the shell and tube temperature to above the sulfur melting temperature. The collected solid sulfur is removed as liquid sulfur and directed to the dedicated sulfur lock. A typical SRE loss of sulfur vapor in a process gas of 90 °C amounts to 0.01%.

Taking into account some sulfur vapor losses, the cumulative overall SRE is 99.95 %.

## EXAMPLE 2

A selective oxidation converter (the SUPERCLAUS® converter downstream of the second Claus converter) receives tail gas from the preceding Claus converter. The $H_2S$ content in the process gas feed amounts to 1.0 vol.%, the $SO_2$ content is 0.08 vol.%, the water vapor content is 30 vol.%, the oxygen content is 0.7 vol.%, and the balance is nitrogen. In the selective oxidation converter the incoming $H_2S$ is oxidized to sulfur vapor. The free oxygen content in the product gas is 0.2 vol.%, which is significantly lower than the normally applied 0.5-1.0 vol.%. Despite of this low oxygen content, the conversion to sulfur is 94.5 %.

## EXAMPLE 3

A hydrogenation converter receives tail gas from the preceding selective oxidation converter. The $H_2S$-content in the process gas feed amounts to 0.02 vol.%, the $SO_2$ content is 0.12 vol.%, the water vapor content is 30 vol.%, the hydrogen content is 3.0 vol.%, the CO content is 0.5 vol.%, the oxygen content is 0.2 vol.%, and the balance is nitrogen. At a converter inlet temperature of 220 °C, no $SO_2$ is detected in the product gas.

## EXAMPLE 4

A selective oxidation converter receives tail gas from the preceding hydrogenation converter. The $H_2S$-content in the process gas feed amounts to 0.3 vol.%. An amount of air is added in such a way that the oxygen concentration in the process gas feed is 0.5 %. Despite the low $H_2S$ content of 0.3 vol.%, the conversion to sulfur is 92.5 %.

**Claims**

1. Process for the recovery of sulfur from sulfur containing gases with a high sulfur recovery efficiency of at least 99.8 %, comprising:

   - treating of acid gas feed in a Claus-type installation, to produce a tail gas in which the total concentration of sulfur compounds is less than 0.8 vol.%, expressed as $S_1$;
   - subjecting the sulfur compounds in the tail gas from said Claus-type installation to a hydrogenation/hydrolysis step to produce a product gas comprising $H_2S$;
   - selectively oxidizing $H_2S$ in said product gas with an appropriate catalyst to elemental sulfur in a selective oxidation converter at a temperature between the water dewpoint temperature and 280 °C; and
   - cooling the gas leaving the selective oxidation step to a temperature of 80-115 °C.

2. Process according to claim 1, wherein the tail gas from the Claus-type installation has a free oxygen concentration of 0 vol.% to less than 0.8 vol.%.

3. Process according to claim 1 or 2, wherein the tail gas from the Claus-type installation has a free oxygen concentration of 0.1-0.7 vol.%.

4. Process according to any one of the preceding claims, wherein the tail gas from the Claus-type installation has a free oxygen concentration of 0.2-0.5 vol.%.

5. Process according to any one of the preceding claims, wherein the last catalytic step of the Claus-type installation is selective oxidation of $H_2S$.

6. Process according to any one of the preceding claims, wherein a water removal after the hydrogenation/hydrolysis step is absent.

7. Process according to any one of the preceding claims, wherein the $H_2S/SO_2$ ratio in the gas leaving the Claus-type installation is lower than 1.

8. Process according to any one of the preceding claims, wherein the selective oxidation converter is operated above the flat sulfur dewpoint.

9. Process according to any one of the preceding claims, wherein the selective oxidation converter is operated at least 5-15 °C above the flat sulfur dewpoint.

10. Process according to any one of the preceding claims, wherein the concentration of sulfur compounds in the tail gas from the Claus-type installation, expressed as $S_1$, is less than 0.5 vol.%, preferably less than 0.3 vol. %.

11. Process according to any one of the preceding claims, wherein the selective oxidation step is carried out in a dry bed converter.

12. Process according to any one of the preceding claims, wherein the hydrogenation/hydrolysis step is carried out in the presence of a low temperature (200-250 °C) hydrogenation/hydrolysis catalyst.

13. Process according to any one of claims 1-11, wherein the hydrogenation/hydrolysis step is carried out in the presence of a high temperature (280-330 °C) hydrogenation/hydrolysis catalyst.

14. Process according to any one of the preceding claims, wherein the product gas from the selective oxidation converter is cooled in a heat exchanger.

15. Process according to claim 14, wherein the heat exchanger is periodically regenerated.

16. Process according to any one of the preceding claims, wherein the product gas from the selective oxidation converter is cooled to 80-90 °C.

**17.** Process according to any one of the preceding claims, wherein at least one stream comprising $H_2S$, sulfur vapor and free oxygen is mixed with the product gas of the hydrogenation/hydrolysis step.

**18.** Process according to claim 17, wherein the stream comprising $H_2S$, sulfur vapor and free oxygen is a vent stream, such as a vent stream from a sulfur pit, sulfur tank or sulfur degassing vessel.

**19.** Process according to any one of the preceding claims, wherein the hydrogenating/hydrolysis step is carried out in the presence of a cobalt-molybdenum catalyst.

**20.** Process according to any one of the preceding claims, wherein the product gas of the hydrogenation step is cooled to a temperature of 180-210 °C.

**21.** Process for the recovery of sulfur from sulfur containing gases with a high sulfur recovery efficiency, comprising:

- treating of acid gas feed in a Claus-type installation comprising at least two catalytic Claus stages and a final selective oxidation step;
- hydrogenating and hydrolyzing the sulfur compounds in the tail gas from said Claus-type installation in a hydrogenation/hydrolysis step to produce a product gas comprising $H_2S$;
- separating the $H_2S$ in said product gas from the other components in accordance with a SCOT or a BSR-Stretford process.

**22.** Use of a vent stream comprising $H_2S$, sulfur vapor and free oxygen, as a feed gas for a selective oxidation stage in a process for sulfur recovery from sulfur containing gases.

**23.** Use according to claim 21, wherein the vent stream is a vent stream from a sulfur pit, sulfur tank or sulfur degassing vessel.

Figure 1

**European Patent Office**

**EUROPEAN SEARCH REPORT**

Application Number

EP 06 07 6765

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 5 676 921 A (HEISEL ET AL) 14 October 1997 (1997-10-14) * column 6, line 35 - column 7, line 56 * * column 3, line 64 - column 4, line 4 * | 1,11,14, 15,19 | INV. B01D53/86 C01B17/04 |
| D,Y | US 5 897 850 A (BORSBOM ET AL) 27 April 1999 (1999-04-27) * column 2, line 41 - column 3, line 11 * * column 10, line 30 - column 13, line 64 * | 1,2,6,8, 9,11,14, 15,19,20 | |
| Y | US 5 352 422 A (VAN DEN BRINK ET AL) 4 October 1994 (1994-10-04) * column 8, line 25 - column 8, line 53; claim 1 * | 1,19 | |
| Y | US 5 607 657 A (PHILIPPE ET AL) 4 March 1997 (1997-03-04) * column 1, line 10 - column 1, line 19; claim 1 * * column 8, line 65 - column 10, line 4 * | 1,2,6,19 | |
| Y | US 5 185 140 A (KVASNIKOFF ET AL) 9 February 1993 (1993-02-09) * column 1, line 9 - column 1, line 21 * * column 9, line 65 - column 11, line 18 * | 1,8,9, 19,20 | TECHNICAL FIELDS SEARCHED (IPC) B01D C01B |
| Y | US 6 652 827 B1 (BORSBOOM ET AL) 25 November 2003 (2003-11-25) * column 6, line 57 - column 11, line 34; examples 1,2 * | 1 | |
| X | WO 94/11105 A (AKZO NOBEL N.V.) 26 May 1994 (1994-05-26) * page 11, line 25 - page 12, line 23 * | 21 | |

~~The present search report has been drawn up for all claims~~

| Place of search | Date of completion of the search | Examiner |
|---|---|---|
| The Hague | 27 June 2007 | Doolan, Gerard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 1 902 769 A1

## ANNEX TO THE EUROPEAN SEARCH REPORT
## ON EUROPEAN PATENT APPLICATION NO.

EP 06 07 6765

This annex lists the patent family members relating to the patent documents cited in the above-mentioned European search report.
The members are as contained in the European Patent Office EDP file on
The European Patent Office is in no way liable for these particulars which are merely given for the purpose of information.

27-06-2007

| Patent document cited in search report | | Publication date | Patent family member(s) | | Publication date |
|---|---|---|---|---|---|
| US 5676921 | A | 14-10-1997 | NONE | | |
| US 5897850 | A | 27-04-1999 | NONE | | |
| US 5352422 | A | 04-10-1994 | NONE | | |
| US 5607657 | A | 04-03-1997 | AT | 157277 T | 15-09-1997 |
| | | | CA | 2135907 A1 | 29-09-1994 |
| | | | CN | 1105175 A | 12-07-1995 |
| | | | DE | 69405179 D1 | 02-10-1997 |
| | | | DE | 69405179 T2 | 26-03-1998 |
| | | | DK | 640005 T3 | 06-04-1998 |
| | | | EP | 0640005 A1 | 01-03-1995 |
| | | | ES | 2108981 T3 | 01-01-1998 |
| | | | FR | 2702674 A1 | 23-09-1994 |
| | | | WO | 9421359 A1 | 29-09-1994 |
| | | | JP | 3471801 B2 | 02-12-2003 |
| | | | JP | 7509437 T | 19-10-1995 |
| | | | NO | 944357 A | 13-01-1995 |
| | | | RU | 2116123 C1 | 27-07-1998 |
| US 5185140 | A | 09-02-1993 | NONE | | |
| US 6652827 | B1 | 25-11-2003 | AT | 246033 T | 15-08-2003 |
| | | | AU | 5534499 A | 14-03-2000 |
| | | | BR | 9913300 A | 22-05-2001 |
| | | | CA | 2341479 A1 | 02-03-2000 |
| | | | CN | 1313784 A | 19-09-2001 |
| | | | DE | 69910049 D1 | 04-09-2003 |
| | | | DE | 69910049 T2 | 22-04-2004 |
| | | | ES | 2205874 T3 | 01-05-2004 |
| | | | JP | 2002523324 T | 30-07-2002 |
| | | | MX | PA01001863 A | 17-04-2002 |
| | | | WO | 0010693 A1 | 02-03-2000 |
| | | | NO | 20010883 A | 26-02-2001 |
| | | | PT | 1115472 T | 31-12-2003 |
| | | | RU | 2232128 C2 | 10-07-2004 |
| WO 9411105 | A | 26-05-1994 | AU | 5466294 A | 08-06-1994 |
| | | | CA | 2149677 A1 | 26-05-1994 |
| | | | DE | 69311576 D1 | 17-07-1997 |
| | | | DE | 69311576 T2 | 04-12-1997 |
| | | | JP | 8503651 T | 23-04-1996 |

For more details about this annex : see Official Journal of the European Patent Office, No. 12/82

13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3752877 A
- NL 0171144 A
- GB 1356289 A
- GB 1547590 A
- CA 1339974 A
- US 4988494 A
- US 4818740 A
- US 5286697 A
- US 5814293 A
- US 6919296 A
- US 4243647 A
- US 6024933 A
- US 5607657 A
- US 5897850 A
- US 6149887 A

**Non-patent literature cited in the description**

- **KOHL ; NIELSEN.** Gas Purification. 698-724
- Sulphur No. 227. July 1993, 39-44
- Sulphur no. 287. July 2003, 31-36